# DEMANDE DE BREVET EUROPEEN

(11) **EP 1 347 198 A1**
(43) Date de publication de la demande: **24.09.2003**
(21) Numéro de dépôt: 02447042.9
(22) Date de dépôt: 22.03.2002
(51) Int. Cl.: F16F 1/44

(54) **Découpleur anti-résonance**

(71) Demandeur: Aktyna Technology SA, 7160 Chapelle-Lez-Herlaimont (BE)
(72) Inventeur: Gioulos, Panagiotis, 7100 La Louviére (BE); Gioulos, Jean, 7160 Chapelle-Lez-Herlaimont (BE)
(74) Mandataire: Van Malderen, Joelle

(57) **Abrégé**

La présente invention se rapporte à Découpleur anti-résonance comprenant un premier élément (1) et un deuxième élément (2) formant un assemblage du type mâle-femelle, ledit premier élément (1) présentant une base (10), un sommet (11), et une gorge (8) munie d'au moins une ouverture (80) sur ledit sommet (11) ; ledit deuxième élément (2), présentant une base (20), un sommet (21), une gorge (3) délimitée par des butées (7) au niveau dudit sommet (21) et munie d'une ouverture (30) sur ledit sommet (21) et d'une ouverture (31) sur ladite base (20), la conformation de ladite gorge (3) étant telle que le premier élément (1) est emboîté dans ladite gorge (3) du deuxième élément (2) jusqu'aux dites butées (7) et occupe un certain volume de ladite gorge (3);
- un troisième élément (6) dit "élément de remplissage" apte à absorber certaines fréquences vibrations et remplissant le volume restant;
des moyens de solidarisation (9) pour bloquer l'assemblage formé par le premier élément (1) et le deuxième élément (2) traversant à la fois le premier élément (1) et le deuxième élément (2).

## Description

### Objet de l'invention

La présente invention se rapporte à un découpleur anti-résonance destiné à des appareils disposés sur des supports et soumis de ce fait à des vibrations.

Une des applications possibles de la présente invention concerne les appareils destinés à produire ou à reproduire des sons et /ou des images.

### Etat de la technique

Tout appareil possède des fréquences propres de vibration qui peuvent, dans certaines situations, perturber ses performances de fonctionnement. C'est le cas notamment des appareils produisant ou reproduisant des sons et/ ou des images tels que les haut-parleurs, les amplificateurs acoustiques, les processeurs, les lecteurs DVD, CD ou SACD, mais aussi des vidéo projecteurs LCD ou DLP qui peuvent par exemple, lorsqu'ils sont disposés sur un support, entrer en résonance quand la fréquence à laquelle ils sont soumis est égale à la fréquence propre de l'ensemble appareil + support. Ceci se traduit par des phénomènes vibratoires parasites qui altèrent la qualité acoustique ou visuelle de l'appareil. Ces phénomènes vibratoires parasites peuvent également être générés par l'appareil lui-même.

Des solutions, correspondant à des dispositifs appelés "découpleurs", ont déjà été proposées en vue d'atténuer plus ou moins fortement ces phénomènes vibratoires parasites. Une ces solutions consiste en un dispositif en forme de cône, généralement en métal, que l'on place sous l'appareil et qui fait office de pied et de moyen de transfert des vibrations parasites. Néanmoins, l'efficacité de ce type de dispositifs est limitée étant donné qu'ils ne suppriment pas les vibrations propres associées à ces dispositifs.

Des dispositifs se présentant sous la forme de disques d'isolation acoustique, généralement en élastomère ou en en cellulose comprimée ont également été proposés.

Le document US-A-4 880 077 décrit un découpleur comprenant un disque inférieur formant la base du dispositif destiné à être placé sous un haut-parleur, en matériau d'isolation acoustique, un disque supérieur servant de support, également en matériau d'isolation acoustique lesdits disques inférieur et supérieur étant relié l'un à l'autre par des moyens d'espacement, et ledit dispositif étant pourvu d'un espace intérieur creux formé par le disque inférieur, le disque supérieur et les moyens d'espacement.

### Buts de l'invention

La présente invention vise à fournir une solution alternative par rapport à l'état de la technique.

Plus précisément la présente invention vise à proposer un découpleur anti-résonance qui absorbe efficacement les vibrations parasites auxquelles est soumis un appareil, en particulier un appareil produisant ou reproduisant une information sonore ou visuelle (des sons et/ ou des images), ledit appareil étant en contact avec une surface support.

Un autre but de l'invention est de fournir un découpleur anti-résonance efficace sur une large gamme spectrale de vibrations, de préférence entre 15 Hz et 200 kHz.

La présente invention vise également à proposer un découpleur anti-résonance qui soit simple de conception et d'utilisation.

Enfin, la présente invention a pour but également de fournir un découpleur anti-résonance qui présente un encombrement réduit.

### Résumé de l'invention

La présente invention se rapporte à un découpleur anti-résonance comprenant un premier élément et un deuxième élément formant un assemblage du type mâle-femelle, ledit premier élément présentant une base, un sommet, et une gorge munie d'au moins une ouverture sur ledit sommet; ledit deuxième élément, présentant une base, un sommet, une gorge délimitée par des butées au niveau dudit sommet et munie d'une ouverture sur ledit sommet et d'une ouverture sur ladite base, la conformation de ladite gorge étant telle que le premier élément est emboîté dans ladite gorge du deuxième élément jusqu'aux dites butées et occupe un certain volume de ladite gorge;
- un troisième élément dit "élément de remplissage" apte à absorber certaines fréquences vibrations et remplissant le volume restant;
- des moyens de solidarisation pour bloquer l'assemblage formé par le premier élément et le deuxième élément traversant à la fois le premier élément et le deuxième élément.

De préférence, l'élément de remplissage est apte à absorber des fréquences de vibrations comprises entre 15 Hz et 200 kHz, de préférence entre 20 Hz et 100 kHz.

De préférence, l'élément de remplissage comprend un élastomère à haute densité.

De préférence, les moyens de solidarisation comprennent une vis de fixation.

Avantageusement, les moyens de solidarisation comprennent en outre une colle.

De préférence, la vis de fixation présente une tête et un corps fileté, la tête étant une tête fraisée, de préférence à six pans creux.

La présente invention concerne également l'utilisation du découpleur anti-résonance selon l'invention pour améliorer la qualité du son émise par un appareil posé sur un support dans le domaine de la Hi-Fi.

Un objet de l'invention est également l'utilisation dudit découpleur anti-résonance dans le domaine de l'électronique de pointe.

Un autre objet de l'invention concerne l'utilisation dudit découpleur dans le domaine de la mécanique de haute précision.

La présente invention se rapporte aussi à l'utilisation dudit découpleur anti-résonance pour des instruments de mesure médicaux.

### Brève description des figures

La figure 1 représente une vue générale en coupe du découpleur anti-résonance selon la présente invention.

La figure 2 représente une vue en coupe montrant le positionnement du découpleur anti-résonance par rapport à une surface support et à la base d'un appareil produisant ou reproduisant le son, tel qu'un haut-parleur.

Les figures 3a-3c représentent différentes vues du premier élément du découpleur selon une forme préférée d'exécution de l'invention sur lesquelles sont reportées les cotes dudit élément.

La figure 4 représente une vue en coupe du second élément du découpleur selon une forme préférée d'exécution de l'invention sur laquelle sont reportées les cotes dudit élément.

### Description détaillée de l'invention

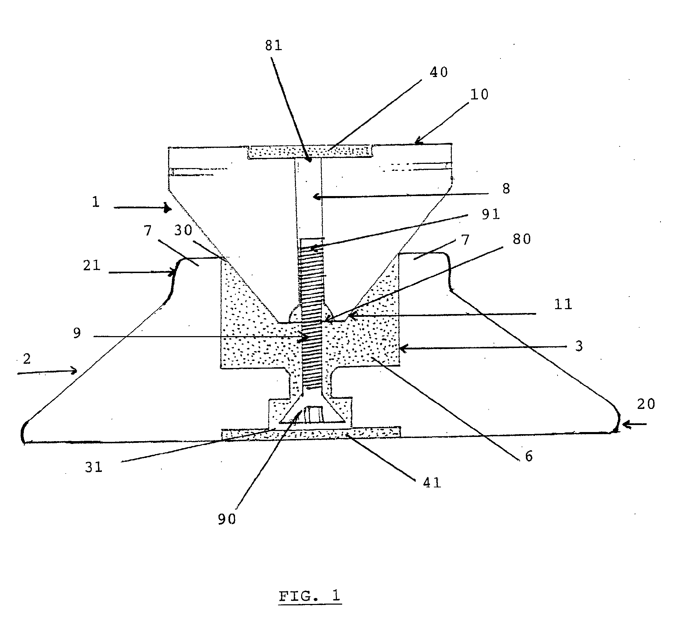

Comme illustré à la figure 1, le dispositif selon l'invention comprend un premier élément 1 qui est de préférence de forme conique (cône) présentant d'une part une base 10 et un sommet 11 et d'autre part une gorge 8 ouverte au niveau du sommet 11 (ouverture 80) et de la base 10 (ouverture 81).

Le dispositif comprend en outre un second élément 2 correspondant à un socle avec une base 20 et un sommet 21, la base 20 étant plus large que le sommet 21.

Le second élément 2 est par ailleurs muni d'une gorge 3 ouverte au niveau du sommet 21 de l'élément 2 (ouverture 30) et de la base 20 (ouverture 31). La conformation de cette gorge 3 est telle que le premier élément 1 (cône) est emboîté dans le second élément 2 (socle) de manière similaire à une pièce mâle dans une pièce femelle, le sommet 11 du cône 1 pénétrant dans la gorge 3 du second élément 2 jusqu'aux butées 7 formées par les rebords de la gorge 3 (le sommet 11 dans le sommet 21).

Le dispositif selon l'invention comprend en outre un troisième élément 6 qui constitue un élément de remplissage qui remplit tout l'intérieur de la gorge 3 autour de l'élément 1 jusqu'aux ouvertures 30 et 31. La composition de cet élément 6 est telle que ses propriétés mécaniques le rendent apte à absorber les résonances vibratoires parasites et à transformer en chaleur l'énergie vibratoire qui leur est associée.

De préférence, cet élément est un polymère, plus précisément un élastomère du type viscoélastique tel que ceux vendus sous la marque Fonomat™ (Société Audiocomp, Italie), sous la marque Tansonic™ (Société Spectra, France) et sous la marque Noisekiller™ (Société Noisekiller, USA).

Cet élément peut également être une émulsion de résines synthétiques et d'oxydes métalliques ou un polymère comprenant différentes charges denses liées au moyen d'un élastomère de polyuréthane à fort pourcentage de cellules ouvertes présentant des qualités d'absorption phoniques élevées.

La composition de l'élément 1 est choisie de façon à ce que ledit élément 1, par sa dureté, soit capable de comprimer l'élastomère 6.

L'élément 1 est de préférence en métal, par exemple en aluminium.

Le dispositif selon la présente invention comprend en outre des moyens de solidarisation de l'élément 1 et de l'élément 2 qui prennent ici la forme d'une vis 9 de fixation dont la tête 90, en position d'assemblage, est située dans la gorge 3 et dont le corps 91, dans la même position d'assemblage, est logé en partie dans la gorge 3 de l'élément 2 et en partie dans la gorge 8 de l'élément 1.

Des moyens de solidarisation additionnels peuvent être utilisés pour bloquer la vis 9 en position d'assemblage. Ces moyens peuvent être constitués par un matériau de fixation tel qu'une résine époxy. Un exemple d'un tel matériau de fixation est celui vendu sous la marque préciser LOCTITE™ (référence produit 275 du catalogue de 1990; famille chimique : diméthacrylate ester ; société Loctite, France).

La vis 9 a une double fonction. Elle permet tout d'abord d'assembler les éléments 1 et 2 tout en assurant une bonne étanchéité du dispositif.

La vis 9 a également pour fonction de coopérer avec l'élément 1 pour comprimer l'élastomère 6 de manière à exercer sur ledit élément 6 une surpression qui favorise la conversion en chaleur de l'énergie vibratoire absorbée par ledit élastomère 6.

La vis 9 est de manière avantageuse une vis en inox et à tête fraisée à six pans creux.

Le dispositif représenté ici présente également des éléments d'obturation 40 et 41 pour obturer les ouvertures, respectivement 81 de l'élément 1 et 31 de l'élément 2 (ouvertures 81 et 31 des gorges respectivement 8 et 3). De préférence, ces éléments d'obturation 40 et 41 sont des pastilles en élastomère.

Avantageusement, on notera que l'ouverture 80 de la gorge 8 de l'élément 1 a une forme de demi-sphère que l'élastomère 6 peut remplir autour de la vis 9 lors de l'assemblage.

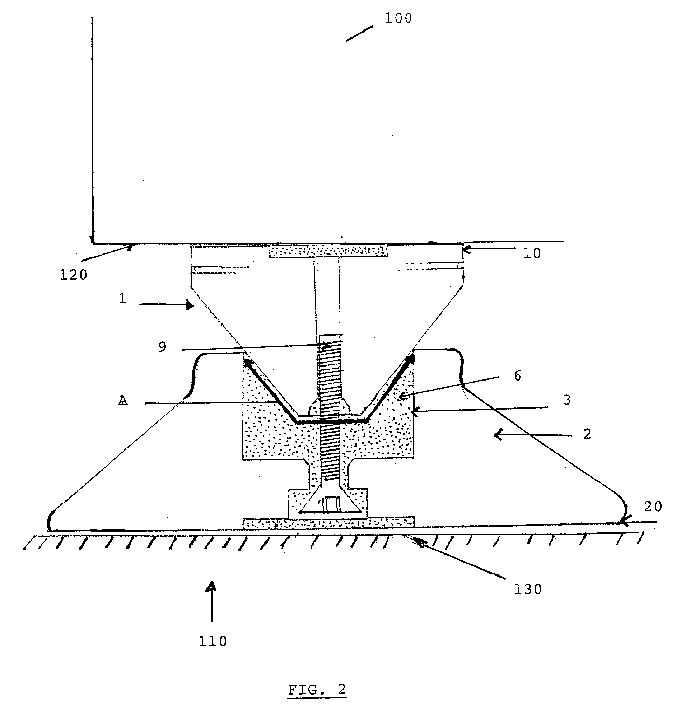

Concrètement, lorsque l'on souhaite améliorer la qualité du son émis par un appareil, tel que par exemple un haut parleur 100 posé sur un support 110, comme illustré à la figure 2, on insère le dispositif selon l'invention entre le haut-parleur 100 et le support 110, de manière à ce que la base 20 de l'élément 2 soit en contact avec la surface 130 du support 110, et que la base 10 de l'élément 1 soit en contact avec la base 120 du haut-parleur 100.

Ainsi, grâce à ce dispositif, lorsque le haut-parleur fonctionne, les vibrations parasites émises sont captées par l'élément 1 et transmises à l'élastomère 6 qui les absorbe et dissipe l'énergie vibratoire qui leur est associée sous forme de chaleur.

On obtient ainsi un découplage mécanique.

Il faut noter que l'efficacité inattendue du dispositif selon l'invention est atteinte en jouant en même temps sur plusieurs paramètres qui ont chacun une influence sur le résultat obtenu, c'est-à-dire le découplage.

Un premier paramètre est la nature de l'élastomère 6 lui-même, qui doit être choisie de façon à optimiser le découplage. En d'autres termes, une constante de ressort aussi faible que possible doit être choisie, de manière à avoir une fréquence de l'élastomère 6 aussi basse que possible et donc une différence entre la fréquence de l'élastomère 6 et celle de l'appareil (par exemple haut-parleur 100) aussi grande que possible.

Un second paramètre est la surpression exercée sur l'élastomère 6 en position assemblée d'une part par l'élément 1 et d'autre part par la vis 9.

De ce point de vue, l'élément 1 présente avantageusement une forme telle qu'il puisse s'appuyer sur la gorge 3 de l'élément 2 tout en permettant l'évacuation des vibrations en direction de l'élastomère 6. L'élément 1 décrit ici présente une forme conique, mais il pourrait également avoir une forme en ogive ou toute forme de fonction analogue.

Un troisième paramètre est la zone A de contact, dans la gorge 3 de l'élément 2, entre l'élément 1 et l'élastomère 6. Cette zone A de contact, qui fait fonction de zone de transfert des vibrations parasites de l'élément 1 vers l'élastomère 6, doit être minimisée de façon à obtenir un découplage aussi important que possible.

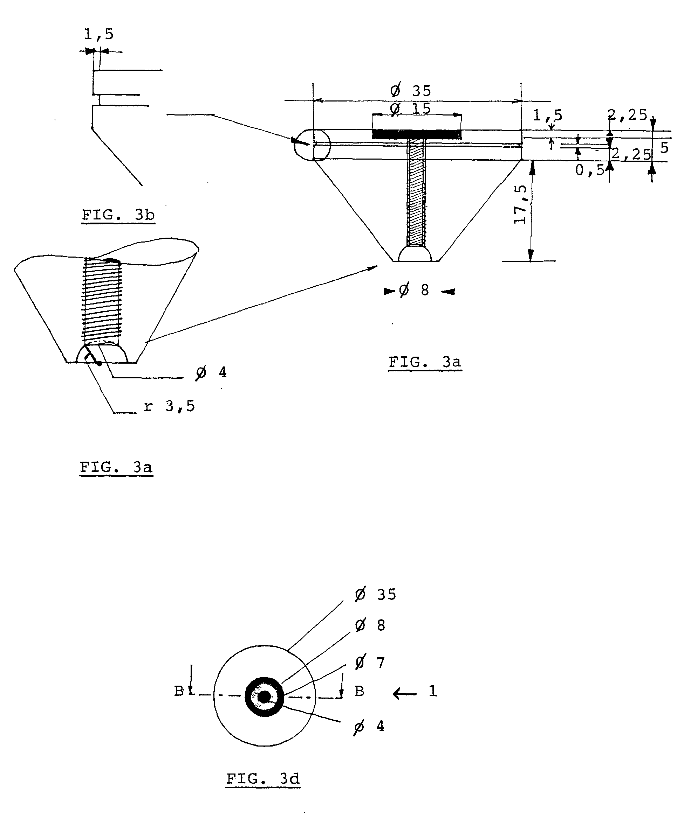

Les figures 3a-3d correspondent à des différentes vues en coupe du premier élément avec ses différentes cotes selon une forme préférée d'exécution de l'invention.

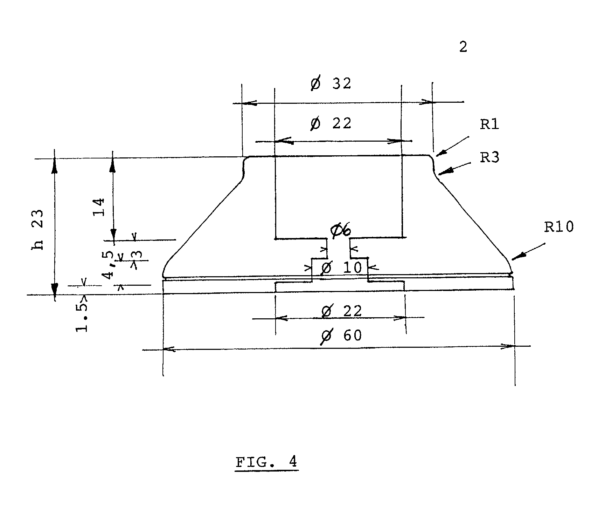

La figure 4 correspond à une vue en coupe du deuxième élément avec ses différentes cotes selon une forme préférée d'exécution de l'invention.

Grâce à sa structure et à sa composition particulières, le découpleur selon la présente invention permet un découplage mécanique stable et efficace de la fréquence à laquelle est soumise l'appareil à la fréquence propre de l'appareil ou de l'ensemble appareil/ support.

La capacité d'absorption des vibrations parasites du découpleur selon l'invention est telle qu'elle permet un écoulement rapide de ces vibrations parasites, même complexes.

Le découpleur selon l'invention peut être utilisé efficacement par exemple pour une enceinte acoustique placée dans une pièce d'écoute. Il évitera l'apparition de résonances audibles qui viendraient se superposer à l'information musicale restituée par ladite enceinte acoustique.

Le découpleur selon l'invention peut également être utilisé dans le domaine des appareils produisant ou reproduisant des images, tels que les vidéo projecteurs et constituera une alternative intéressante aux correcteurs, tels que les correcteurs numériques, souvent très onéreux, en vue d'obtenir une meilleure stabilité et une plus grande fluidité des images. Ces appareils sont en effet soumis à des micro-vibrations générées par les turbulences des moyens de ventilation, les bruits hautes fréquences des alimentations à découpage et de la pression sonore. Ces micro-vibrations atteignent les éléments optiques des projecteurs, en particulier les miroirs, qui déforment alors l'image projetée. Grâce au découpleur selon l'invention, les micro-vibrations parasites sont absorbées et la qualité de l'image projetée est nettement améliorée.

Ce ne sont ici que quelques exemples d'application du découpleur selon l'invention. Bien d'autres domaines techniques sont concernés par la présente invention tels que l'électronique de pointe (microscopes), l'électro-acoustique, la mécanique de haute précision, les instruments de mesure médicaux, ...

## Revendications

1. Découpleur anti-résonance comprenant un premier élément (1) et un deuxième élément (2) formant un assemblage du type mâle-femelle, ledit premier élément (1) présentant une base (10), un sommet (11) et une gorge (8) munie d'au moins une ouverture (80) sur ledit sommet (11) ; ledit deuxième élément (2), présentant une base (20), un sommet (21), une gorge (3) délimitée par des butées (7) au niveau dudit sommet (21) et munie d'une ouverture (30) sur ledit sommet (21) et d'une ouverture (31) sur ladite base (20), la conformation de ladite gorge (3) étant telle que le premier élément (1) est emboîté dans ladite gorge (3) du deuxième élément (2) jusqu'aux dites butées (7) et occupe un certain volume de ladite gorge (3);
- un troisième élément (6) dit « élément de remplissage » apte à absorber certaines fréquences vibrations et remplissant le volume restant;
- des moyens de solidarisation (9) pour bloquer l'assemblage formé par le premier élément (1) et le deuxième élément (2) traversant à la fois le premier élément (1) et le deuxième élément (2).

2. Découpleur anti-résonance selon la revendication 1, **caractérisé en ce que** l'élément de remplissage (6) est apte à absorber des fréquences de vibrations comprises entre 15 Hz et 200 kHz, de préférence entre 20 Hz et 100 kHz.

3. Découpleur selon la revendication 1 ou 2, **caractérisé en ce que** l'élément de remplissage (6) comprend un élastomère à haute densité.

4. Découpleur selon l'une des revendications 1 à 3, **caractérisé en ce que** les moyens de solidarisation comprennent une vis (9) de fixation.

5. Découpleur selon la revendication 4, **caractérisé en ce que** les moyens de solidarisation comprennent en outre une colle.

6. Découpleur selon la revendication 4 ou 5, **caractérisé en ce que** la vis (9) de fixation présente une tête (90) et un corps fileté (91), la tête (90) étant une tête fraisée, de préférence à six pans creux.

7. Utilisation du découpleur anti-résonance selon l'une des revendications précédentes pour améliorer la qualité du son émis par un appareil posé sur un support dans le domaine de la Hi-Fi.

8. Utilisation du découpleur anti-résonance selon l'une des revendications 1 à 6 dans le domaine de l'électronique de pointe.

9. Utilisation du découpleur anti-résonance selon l'une des revendications 1 à 6 dans le domaine de la mécanique de haute précision.

10. Utilisation du découpleur anti-résonance selon l'une des revendications 1 à 6 pour des instruments de mesure médicaux.
